# FASCICULE DE BREVET EUROPEEN

(11) **EP 2 163 419 B1**
(45) Date de publication et mention de la délivrance du brevet: **13.11.2019**
(21) Numéro de dépôt: 09305825.3
(22) Date de dépôt: 09.09.2009
(51) Int. Cl.: B60L 9/22, H02H 7/10

(54) **Chaîne de traction électrique pour véhicule ferroviaire**
Elektrische Zugkette für Schienenfahrzeug
Electric traction chain for a rail vehicle

(30) Priorité: 12.09.2008 FR 0856157
(43) Date de publication de la demande: 17.03.2010
(73) Titulaire: ALSTOM Transport Technologies, 93400 Saint-Ouen (FR)
(72) Inventeur: Boukhari, Kévin, 92500, RUEIL MALMAISON (FR); Porcher, Frédéric, 65310, HORGUES (FR); Fellmann, Daniel, 65420, IBOS (FR)
(74) Mandataire: Lavoix

(56) Documents cités:
- EP-A- 0 848 486
- JP-A- H05 153 702
- US-A- 4 904 918
- US-A- 5 170 310
- US-A1- 2002 118 500

## Description

La présente invention concerne une chaîne de traction électrique pour véhicule ferroviaire, et plus particulièrement une telle chaîne de traction comprenant des moyens de captage, tel qu'un pantographe, de l'énergie électrique sur une ligne l'alimentation telle qu'une caténaire ou un conducteur de type troisième rail, et au moins un circuit électronique de puissance comprenant un convertisseur statique de traction pour l'alimentation électrique d'au moins un moteur électrique.

Le document EP 0 848 486 A2 divulgue une telle chaîne de traction comportant une pluralité d'étages de commutation disposés en série entre un pantographe en contact avec une caténaire et une roue du véhicule. Chaque étage de commutation est un convertisseur deux points comportant une paire d'interrupteurs statiques et un interrupteur, commandés par un signal adapté.

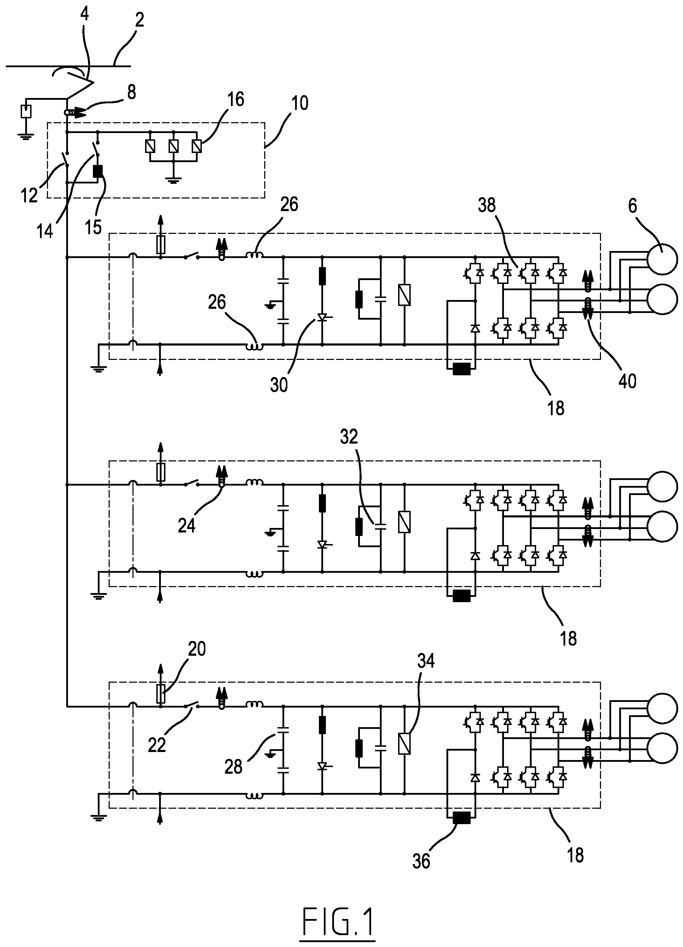

Le document JP H05 153702A décrit une chaîne de traction électrique pour véhicule ferroviaire suivant le préambule de la revendication 1. Afin de mieux comprendre les problèmes posés par l'art antérieur, on décrira en premier lieu, en référence à figure 1, les éléments essentiels d'une chaîne de traction conventionnelle.

On voit sur cette figure la chaîne de traction d'un véhicule ferroviaire alimentée en courant continu à partir d'une caténaire 2 par l'intermédiaire d'un pantographe 4. Cette chaîne de traction comprend à l'autre extrémité trois groupes de deux moteurs 6.

Un capteur 8 de mesure de courant de pantographe est disposé en amont d'un coffre disjoncteur 10 contenant un disjoncteur général 12, un contacteur de précharge 14 associé à une résistance 15 en série pour la précharge des capacités d'entré du convertisseur qui seront décrites ci-après, et un capteur 16 de tension de caténaire. Le disjoncteur général 12 est réalisé sous la forme d'un coupe-circuit électromécanique.

Chaque groupe de deux moteurs 6 est alimenté à partir d'un coffre de traction 18 contenant l'électronique de puissance d'alimentation des deux moteurs respectifs, et notamment le convertisseur statique de traction pour ces deux moteurs. Chaque coffre de traction 18 comporte une sortie 20 vers des convertisseurs statiques auxiliaires.

Chaque coffre de traction 18 contient tout d'abord un contacteur d'isolement électromécanique 22 permettant d'isoler une branche en défaut de manière à placer le véhicule en mode dégradé. Il contient ensuite en série avec le contacteur d'isolement 22 un capteur de courant 24 et des selfs d'entrée 26 dont la fonction est de supporter en cas de défaut les courants crêtes de court-circuit avant l'ouverture du disjoncteur 12. Un filtre capacitif 28 est ensuite connecté en parallèle.

Un court-circuiteur 30, par exemple du type IGBT ou thyristor, est également connecté en parallèle, ainsi que les capacités d'entrée 32 du convertisseur et un capteur de tension bus 34.

Le court-circuiteur 30 a une fonction d'écrêteur permettant d'éviter les surtensions. Les capacités 32 sont préchargés préalablement à la mise en service de la chaîne de traction, par fermeture du contacteur de précharge 14 alors que le disjoncteur 12 est encore ouvert.

L'ensemble des circuits ci-dessus est suivi de façon également connue du rhéostat de freinage 36 et du convertisseur statique de traction triphasé 38, lequel alimente les deux moteurs 6 de son groupe. Des capteurs de courant 40 mesurent le courant fourni aux moteurs.

Un premier problème réside dans la présence du coupe-circuit électromécanique 12. Ce coupe-circuit a pour fonction de protéger la chaine de traction contre les sur-courants engendrés par des défauts de type court-circuit, échelon de tension, etc., en s'ouvrant le plus rapidement possible, notamment dans le "pire-cas" d'un sur-courant de défaut survenant sur les trois bus de convertisseurs simultanément. Ce coupe-circuit présente les inconvénients habituels des composants mécaniques, notamment le défaut de fiabilité, la sensibilité aux conditions environnementales, la nécessité d'une maintenance fréquente et une relative lenteur de réaction.

Ces inconvénients des coupe-circuit électromécaniques sont également ceux des contacteurs d'isolement 22.

Par ailleurs, on notera la nécessité du système de précharge. Il n'est en effet pas possible de simplement fermer le disjoncteur 12 à la mise en service de la chaîne de traction. Un circuit spécial est donc prévu, comprenant le contacteur 14 et la résistance 15 qui a pour fonction de limiter le courant de charge des condensateurs 32. Le contacteur 14 présente en outre les inconvénients précités des composants mécaniques.

Un autre inconvénient est celui de la dimension des selfs d'entrée 26. Elles sont dimensionnées pour résister aux sur-courants engendrés par des défauts de type court-circuit ou par les surtensions sur la ligne d'alimentation.

Enfin, on notera également la présence de composants électroniques de puissance comme courts-circuiteurs.

Par ailleurs, on connait, par exemple du document US-5,170,310, des circuits intégrant des contacteurs disjoncteurs statiques, placés en série avec la charge à protéger et dont l'état est contrôlé par une unité de commande, de manière à interrompre le courant dans la maille correspondante lorsque le courant excède un seuil prédéterminé.

La présente invention vise à palier ces inconvénients.

Plus particulièrement, l'invention a pour but de fournir une chaîne de traction électrique pour véhicule ferroviaire limitant et, dans la mesure du possible, éliminant l'usage de composants électromécaniques.

L'invention a également pour but de fournir une chaîne de traction électrique pour véhicule ferroviaire, dans laquelle la dimension des selfs d'entrée est réduite.

L'invention a également pour but de permettre la suppression des courts-circuiteurs des écrêteurs ou tout autre dispositif permettant d'éviter les surtensions.

A cet effet, l'invention a tout d'abord pour objet une chaîne de traction électrique pour véhicule ferroviaire comprenant des moyens de captage de l'énergie électrique sur une ligne d'alimentation, et au moins un circuit électronique de puissance comprenant un convertisseur statique de traction pour l'alimentation électrique d'au moins un moteur électrique, ladite chaîne comprenant un contacteur disjoncteur statique (CDS, ou SSCB pour *solid state circuit breaker* en anglais) entre les moyens de captage et chaque circuit électronique de puissance, commandé pour s'ouvrir lorsque le courant qui le traverse atteint un seuil prédéterminé, la chaîne de traction ne comportant pas de disjoncteur général.

L'invention permet donc de supprimer le disjoncteur électromécanique et de le remplacer par un composant électronique de puissance.

Dans un mode de réalisation particulier, le circuit électronique de puissance comprend des capacités d'entrée du convertisseur, et le contacteur disjoncteur statique est commandé pour assurer la précharge desdites capacités d'entrée.

Egalement dans un mode de réalisation particulier, le contacteur disjoncteur statique est commandé pour écrêter les surtensions engendrées aux bornes du convertisseur statique de traction par les surtensions dans la ligne d'alimentation.

La chaîne de traction selon l'invention peut également comprendre un fusible général entre les moyens de captage et chaque contacteur disjoncteur statique.

Dans un autre mode de réalisation, la chaîne de traction selon l'invention comprend un fusible entre chaque contacteur disjoncteur statique et le circuit électronique de puissance associé.

L'invention a également pour objet un véhicule ferroviaire équipé d'une chaîne de traction selon l'une quelconque des revendications précédentes

On décrira maintenant, à titre d'exemple non limitatif, des modes de réalisation particuliers de l'invention, en référence aux dessins schématiques annexés dans lesquels :
- la figure 1, déjà décrite, illustre une chaîne de traction conventionnelle ;
- la figure 2 illustre une chaîne de traction selon un premier mode de réalisation de l'invention ; et
- la figure 3 illustre une chaîne de traction selon un deuxième mode de réalisation de l'invention.

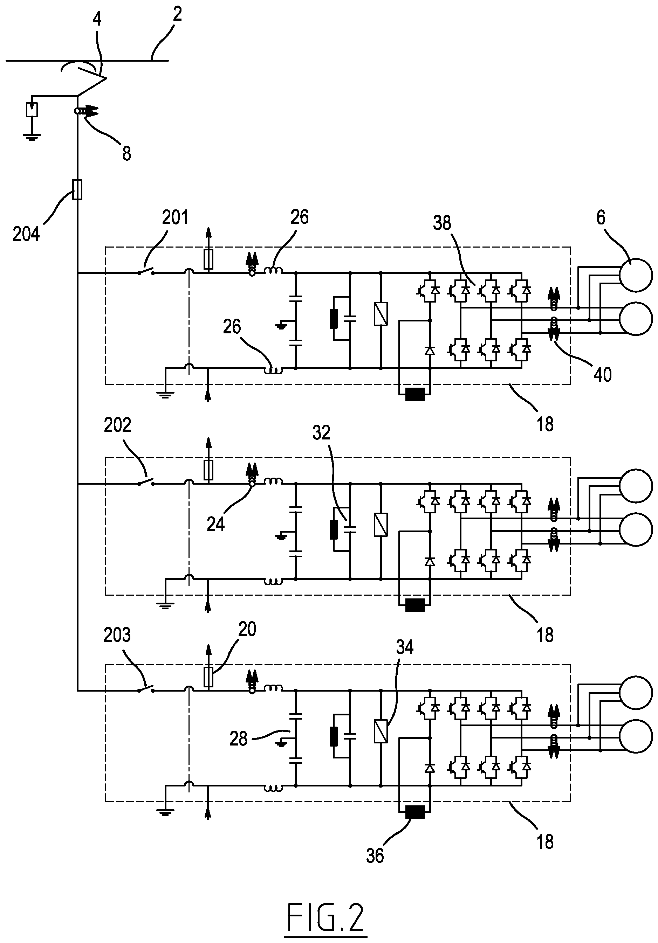

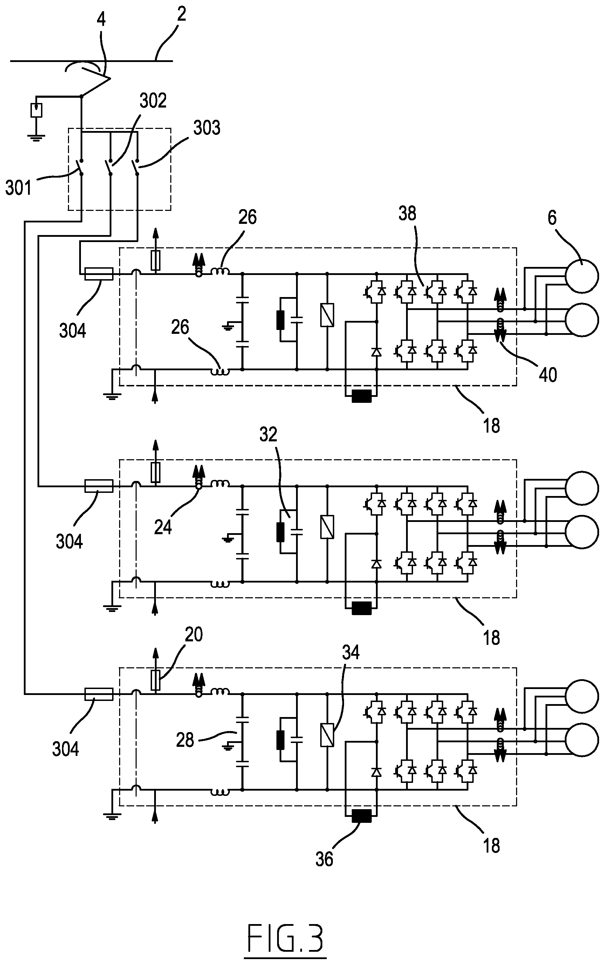

On décrira maintenant les différences entre la chaîne de traction conventionnelle de la figure 1 et les chaînes de traction des figures 2 et 3. On reprendra sur les figures 2 et 3 les mêmes références que sur la figure 1 pour les éléments homologues.

Dans les deux modes de réalisation de l'invention, le disjoncteur électromécanique général 12 de la chaîne de traction est remplacé par un contacteur disjoncteur statique individuel par coffre de traction 18, disposé sur le bus continu. La chaîne de traction comporte donc ici trois contacteurs disjoncteurs statiques 201, 202, 203 (dans le cas de la figure 2) ou 301, 302, 303 (dans le cas de la figure 3). Les contacteurs disjoncteurs statiques 201, 202, 203 et 301, 302, 303 forment également contacteurs d'isolement. Ainsi, aussi bien le disjoncteur général électromécanique que les contacteurs d'isolement électromécaniques de la figure 1 sont supprimés. Les courts-circuiteurs sont également supprimés.

Dans le mode de réalisation de la figure 2, les contacteurs disjoncteurs statiques 201, 202, 203 sont disposés sur le bus continu en entrée de chaque coffre de traction 18. La chaîne de traction comprend un fusible 204 unique directement en sortie du pantographe 4.

Dans le mode de réalisation de la figure 3, les contacteurs disjoncteurs statiques 301, 302, 303 sont regroupés dans un boîtier unique (Tout ou parties de ces CDS pourraient être mis en commun). La chaîne de traction comprend un fusible 304 à l'entrée de chaque coffre de traction 18.

Le seuil de déclenchement: de chaque contacteur disjoncteur statique est le niveau de courant minimal au-delà duquel son ouverture doit être déclenchée, et est donc égal à la valeur de courant engendrée par un échelon de tension de caténaire qui provoquerait, aux bornes du filtre d'entrée du convertisseur de traction respectif, une variation de tension allant de la tension inférieure à la tension supérieure d'inhibition du convertisseur.

En ce qui concerne la fonction d'écrêtage des surtensions sur le bus de traction, chaque contacteur disjoncteur statique est commandé de manière à maintenir aux bornes de la capacité d'entrée du convertisseur de traction respectif une tension comprise entre la tension inférieure et la tension supérieure d'inhibition du convertisseur, malgré l'occurrence de surtensions de caténaire de type "onde carrée" (telles que définies dans les normes, par exemple CEI61287 et EN50163) ou de type "onde sinusoïdale". On observera que cette fonction n'est utilisable et active qu'en mode "traction" ; en "freinage", l'écrêtage est assuré par le hacheur rhéostatique.

Les commandes d'ouverture et de fermeture des contacteurs disjoncteurs statiques sont élaborées selon la stratégie de gestion adoptée (fonction "protection contre les défaut" (surcourant/surtension), fonction "mode contacteur", fonction "mode précharge"), en fonction des ordres de pilotage, des informations sur le véhicule (traction, freinage, puissance consommée...), et des données recueillies des capteurs de la chaine de traction (tensions d'entrée des convertisseurs de traction, courants d'entrée des coffres de traction et circulant dans les selfs du filtre d'entrée des convertisseurs de traction, tension caténaire...).

La fonction "protection contre les défaut" rassemble les deux sous-fonctions suivantes :
- protection contre les surtensions de caténaire se propageant sur les bus convertisseurs (en mode traction uniquement) ;
- protection contre les surcourants survenant sur les bus convertisseurs (en mode traction et/ou freinage) dus à des courts-circuits, des sauts de tension caténaires, etc.

Après l'ouverture du dispositif, un sectionneur placé en série avec le contacteur disjoncteur statique peut être actionné de façon à augmenter le pouvoir d'isolement apporté par les seuls composants de puissance.

## Revendications

1. Chaîne de traction électrique pour véhicule ferroviaire comprenant des moyens (4) de captage de l'énergie électrique sur une ligne d'alimentation (2), et au moins un circuit électronique de puissance (18) comprenant un convertisseur statique de traction (38) pour l'alimentation électrique d'au moins un moteur électrique (6), **caractérisée par le fait qu'**elle comprend un contacteur disjoncteur statique (CDS) (201, 202, 203 ; 301, 302, 303) entre les moyens de captage et chaque circuit électronique de puissance, commandé pour s'ouvrir lorsque le courant qui le traverse atteint un seuil prédéterminé, la chaîne de traction ne comportant pas de disjoncteur général.

2. Chaîne de traction selon la revendication 1, dans laquelle le circuit électronique de puissance comprend des capacités d'entrée du convertisseur (32), et le contacteur disjoncteur statique est commandé pour assurer la précharge desdites capacités d'entrée.

3. Chaîne de traction selon l'une quelconque des revendications 1 et 2, dans laquelle le contacteur disjoncteur statique est commandé pour écrêter les surtensions engendrées aux bornes du convertisseur statique de traction par les surtensions dans la ligne d'alimentation.

4. Chaîne de traction selon l'une quelconque des revendications 1 à 3, comprenant un fusible général (204) entre les moyens de captage et chaque contacteur disjoncteur statique.

5. Chaîne de traction selon l'une quelconque des revendications 1 à 3, comprenant un fusible (304) entre chaque contacteur disjoncteur statique et le circuit électronique de puissance associé.

6. Chaîne de traction selon l'une quelconque des revendications 1 à 5, comprenant un sectionneur en série avec le contacteur disjoncteur statique

7. Véhicule ferroviaire **caractérisé par le fait qu'**il est équipé d'une chaîne de traction selon l'une quelconque des revendications précédentes.

## Patentansprüche

1. Elektrischer Antriebsstrang für ein Schienenfahrzeug, aufweisend Mittel (4) zum Messen der elektrischen Energie auf einer Versorgungsleitung (2) und mindestens eine elektronische Leistungsschaltung, welche einen statischen Antriebskonverter (38) zur elektrischen Versorgung von mindestens einem Elektromotor (6) aufweist, **gekennzeichnet dadurch, dass** er einen statischen Schütz-Schutzschalter (CDS) (201, 202, 203; 301, 302, 303) zwischen den Mitteln zum Messen und jeder elektronischen Leistungsschaltung aufweist, welcher so gesteuert wird, dass er sich öffnet, wenn der durch ihn hindurchfließende Strom eine vorbestimmte Schwelle erreicht, wobei der elektrische Antriebsstrang keinen Hauptschutzschalter aufweist.

2. Antriebstrang gemäß dem Anspruch 1, wobei die elektronische Leistungsschaltung aufweist Eingangskapazitäten (32) des Konverters und der statische Schütz-Schutzschalter gesteuert wird, um die Vorladung besagter Eingangskapazitäten sicherzustellen.

3. Antriebstrang gemäß irgendeinem der Ansprüche 1 und 2, wobei der statische Schütz-Schutzschalter gesteuert wird, um die Überspannungen, welche an Anschlüssen des statischen Antriebskonverters durch die Überspannungen in der Versorgungsleitung erzeugt werden, abzuschneiden.

4. Antriebstrang gemäß irgendeinem der Ansprüche 1 bis 3, aufweisend eine Hauptsicherung (204) zwischen den Mitteln zum Messen und jedem statischen Schütz-Schutzschalter.

5. Antriebstrang gemäß irgendeinem der Ansprüche 1 bis 3, aufweisend eine Sicherung (304) zwischen jedem statischen Schütz-Schutzschalter und der zugehörigen elektronischen Leistungsschaltung.

6. Antriebstrang gemäß irgendeinem der Ansprüche 1 bis 5, aufweisend einen in Reihe mit dem statischen Schütz-Schutzschalter geschalteten Trennschalter.

7. Schienenfahrzeug, **gekennzeichnet dadurch, dass** es mit einem Antriebstrang gemäß irgendeinem der vorhergehenden Ansprüche ausgestattet ist.

## Claims

1. An electric traction chain for a railway vehicle comprising means (4) for collecting electrical energy on a supply line (2), and at least one power electronics circuit (18) comprising a static traction converter (38) for the electrical power supply of at least one electric motor (6), **characterized in that** the electric traction chain comprises a solid state circuit breaker (SSCB) (201, 202, 203; 301, 302, 303) between the collecting means and each power electronics circuit, controlled to open when the current flowing through it reaches a predetermined threshold.

2. A traction chain according to claim 1, in which the power electronics circuit comprises input capacitors (32) for the converter, and the solid state circuit breaker is controlled to realise the precharging of the input capacitors.

3. A traction chain according to either claim 1 or claim 2, in which the solid state circuit breaker is controlled to clip the voltage surges generated across the terminals of the static traction converter by the voltage surges in the supply line.

4. A traction chain according to any one of claims 1 to 3, comprising a main fuse (204) between the collecting means and each solid state circuit breaker.

5. A traction chain according to any one of claims 1 to 3, comprising a fuse (304) between each solid state circuit breaker and the associated power electronics circuit.

6. A traction chain according to any one of claims 1 to 5, comprising an isolator in series with the solid state circuit breaker.

7. A railway vehicle, **characterized in that** it is equipped with a traction chain according to any one of the preceding claims.
